# DEMANDE DE BREVET EUROPEEN

(11) **EP 3 225 435 A1**
(43) Date de publication de la demande: **04.10.2017**
(21) Numéro de dépôt: 17162115.4
(22) Date de dépôt: 21.03.2017
(51) Int. Cl.: B60F 1/04, B60W 10/188, F16H 61/40

(54) **VEHICULE FERROVIAIRE A FREINAGE HYDROSTATIQUE REGLABLE**

(30) Priorité: 29.03.2016 FR 1652670
(71) Demandeur: UNAC, 30310 Vergeze (FR)
(72) Inventeur: LUMEN, Stéphane, 30310 Vergeze (FR); PELLIEUX, Gaëtan, 34000 Montpellier (FR); CALAMIA, Julien, 30670 Aigues-Vives (FR)
(74) Mandataire: Pontet Allano & Associes

(57) **Abrégé**

L'invention concerne un véhicule ferroviaire, en particulier rail-route, comprenant au moins un moteur hydraulique (104₁,104₂) alimenté en fluide hydraulique pour déplacer ledit véhicule sur une voie ferrée, caractérisé en ce qu'il comprend un système (110) de régulation d'un freinage hydrostatique dudit véhicule, ledit système (110) comprenant pour au moins un moteur hydraulique (104₁,104₂) :
- au moins un moyen (112) de régulation de la pression dudit fluide hydraulique en aval dudit moteur hydraulique (104₁,104₂) lors du freinage hydrostatique dudit véhicule, et
- un moyen (114) de commande dudit au moins un moyen de régulation (112) pour modifier une valeur maximale de la pression dudit fluide hydraulique en aval dudit moteur hydraulique (104₁,104₂).

## Description

La présente invention concerne un véhicule ferroviaire, en particulier de type rail-route, et plus particulièrement une pelle rail-route, à freinage hydrostatique réglable.

Le domaine de l'invention est le domaine des véhicules ferroviaires, en particulier des véhicules rail-route, et encore plus particulièrement des véhicules industriels ferroviaires ou rail-route, de type pelle rail-route, débroussailleuse rail-route, etc.

### Etat de la technique

On connait des véhicules industriels rail-route conçus pour circuler à la fois sur une route et sur une voie ferrée, en vue par exemple d'accomplir divers travaux de voieries sur, ou en périphérie, de la voie ferrée, par exemple pour débroussailler avec une débroussailleuse ou intervenir en profondeur avec une pelleteuse. Ces véhicules comprennent des roues pneumatiques pour circuler sur route et des essieux ferroviaires munis de roues métalliques pour rouler sur une voie ferrée.

Dans ces véhicules, au moins un essieu ferroviaire est muni d'un moteur hydraulique pour déplacer le véhicule sur la voie ferrée. Le moteur hydraulique est alimenté par une pompe, dont le fonctionnement est généralement contrôlé, directement ou indirectement, par une pédale d'accélération. Lorsque le véhicule est en mouvement sur une voie ferrée et que la pédale d'accélération n'est pas actionnée, alors le véhicule est soumis à un freinage hydrostatique, similaire au freinage moteur d'un véhicule traditionnel. Ce freinage hydrostatique est dû au fait que, le moteur de l'essieu ferroviaire continue de tourner car le véhicule est toujours en mouvement sur la voie, alors que la pompe est arrêtée.

Or, le coefficient d'adhérence rail-roue dépend fortement des conditions climatiques. De plus, la présence de dépôts, tels que des feuilles en automne, sur les files de rail vient également dégrader le coefficient d'adhérence rail-roue. Lorsque le coefficient d'adhérence rail-roue est dégradé, un freinage hydrostatique important peut entraîner le blocage des roues. Un tel blocage des roues provoque une perte de contrôle du véhicule, ce qui peut entraîner un accident ou un déraillement.

Un but de la présente invention est de pallier ces inconvénients.

Un autre but de l'invention est de proposer un véhicule ferroviaire, ou véhicule rail-route, dont le freinage hydrostatique est mieux contrôlé, en particulier lorsque le coefficient d'adhérence rail-roue est dégradé.

Encore un autre but de l'invention est de proposer un véhicule ferroviaire, ou véhicule rail-route, présentant moins de risques d'accident et/ou de déraillement lors d'un freinage hydrostatique.

Il est aussi un but de l'invention de proposer un véhicule ferroviaire, ou véhicule rail-route, dont le freinage hydrostatique peut être ajusté en fonction des conditions d'adhérence rail-roue.

### Exposé de l'invention

L'invention permet d'atteindre au moins l'un de ces buts par un véhicule ferroviaire, en particulier rail-route, comprenant au moins un moteur hydraulique alimenté en fluide hydraulique pour déplacer ledit véhicule sur une voie ferrée, caractérisé en ce qu'il comprend un système de régulation, en particulier à la volée, d'un freinage hydrostatique dudit véhicule, ledit système comprenant pour au moins un moteur hydraulique :
- au moins un moyen de régulation de la pression dudit fluide hydraulique en aval dudit moteur hydraulique lors du freinage hydrostatique dudit véhicule, et
- un moyen de commande dudit au moins un moyen de régulation pour modifier, en particulier à la volée, une valeur maximale de la pression dudit fluide hydraulique en aval dudit moteur hydraulique.

Ainsi, le système de régulation du véhicule selon l'invention permet, pour au moins un, et en particulier chaque, moteur hydraulique, de réguler la pression maximale du fluide hydraulique en aval du moteur hydraulique. Ce faisant, le système de régulation permet de réguler le couple de freinage maximal lors d'un freinage hydrostatique. En particulier, lorsque le freinage hydrostatique est trop important, par rapport aux conditions d'adhérence rail-roue, il est possible de le diminuer de sorte à éviter, ou d'arrêter, un blocage des roues ferroviaires du véhicule selon l'invention.

Par conséquent, le freinage hydrostatique du véhicule selon l'invention est mieux contrôlé et le véhicule selon l'invention présente moins de risques d'accident et/ou de déraillement lors d'un freinage hydrostatique.

Le véhicule selon l'invention peut comprendre au moins deux, en particulier exactement deux moteurs hydrauliques.

Par exemple, le véhicule selon l'invention peut comprendre exactement deux essieux ferroviaires, et un moteur hydraulique pour chaque essieu ferroviaire. Chaque moteur hydraulique peut être agencé dans l'essieu ferroviaire.

Dans le cas où le véhicule comprend plusieurs moteurs hydrauliques, le système de régulation peut comprendre un moyen de régulation, respectivement un moyen de commande, individuel et indépendant pour au moins un desdits moteurs.

Un tel système permet un contrôle individuel et indépendant, et donc plus précis, du freinage hydrostatique dû à un moteur individuel.

Suivant une version préférée, au moins deux, en particulier exactement deux, moteurs hydrauliques du véhicule selon l'invention peuvent être montés en série. Dans ce cas, l'au moins un moyen de régulation, et/ou l'au moins un moyen de commande, peut être commun audits moteurs hydrauliques montés en série.

Un tel système est peu coûteux et plus simple à mettre en oeuvre et permet un contrôle centralisé et plus équilibré du freinage hydrostatique dû aux moteurs montés en série, et en particulier à l'ensemble des moteurs du véhicule.

Suivant un mode de réalisation particulièrement avantageux, le moyen de régulation peut comprendre une valve de pression proportionnelle traversée par le fluide hydraulique sortant du ou des moteurs hydrauliques, lors du freinage hydrostatique.

Une telle valve de pression est peu coûteuse, présente des dimensions réduites, et est relativement simple à mettre en oeuvre.

De plus, une telle valve de pression permet de réaliser un contrôle de pression très précis.

Enfin, une telle valve de pression peut être commandée par un signal électrique, et en particulier une tension électrique, ou un courant électrique, qui lui est appliqué.

En fonctionnement, une telle valve de pression proportionnelle permet de réguler la pression maximale du fluide hydraulique en amont de ladite valve, à une valeur inférieure ou égale à une valeur de pression seuil ajustable par un signal électrique, et en particulier par une tension électrique, ou un courant électrique, appliqué(e) à ladite valve.

Dans le cas où le véhicule selon l'invention comprend au moins deux moteurs montés en série, la valve de pression proportionnelle peut être disposée de sorte que, lors du freinage hydrostatique, elle est reliée en série aux moteurs montés en série, et injecte le fluide hydraulique sortant d'un des moteurs montés en série en entrée d'un autre des moteurs montés en série.

En particulier, lorsque le véhicule selon l'invention comprend exactement deux moteurs montés en série, la valve de pression proportionnelle peut être disposée de sorte que, lors du freinage hydrostatique, elle est reliée en série aux deux moteurs montés en série, et injecte le fluide hydraulique sortant d'un des moteurs montés en série en entrée de l'autre des moteurs montés en série.

Préférentiellement, la valve de pression proportionnelle peut être montée en aval du dernier des moteurs montés en série. Dans cette configuration, lors du freinage hydrostatique, la valve de pression reçoit le fluide sortant du dernier des moteurs en série et le renvoie à l'entrée du premier des moteurs montés en série.

Autrement dit, dans cette configuration, lors du freinage hydrostatique, les moteurs et la valve de pression proportionnelle se trouvent en série, dans un circuit fermé dans lequel circule le fluide hydraulique.

Une telle architecture présente une complexité, un coût, des dimensions et un temps de mise en oeuvre réduits.

Dans la présente demande, les termes « aval » et « amont » sont déterminés par le sens de circulation du fluide hydraulique.

Suivant un mode de réalisation, le moyen de commande peut comprendre un moyen de commande manuel pour modifier, en particulier à la volée, la valeur de pression maximale, en particulier la valeur seuil de la valve de pression proportionnelle.

Un tel moyen de commande peut être utilisé par un conducteur pour ajuster la valeur de pression maximale en fonction de différents paramètres tels que les conditions météorologiques, la présence ou non de dépôts sur les files de rail, un poids dudit véhicule, etc.

Le moyen de commande manuel peut être disposé dans une cabine, ou un poste conducteur, dudit véhicule, ce qui permet un ajustement, en particulier à la volée, plus ergonomique et avec une plus grande réactivité au changement d'adhérence rail-roue ou en cas de blocage des roues lors d'un freinage hydrostatique.

Le moyen de commande peut commander, en particulier augmenter ou diminuer, une tension électrique, ou un courant électrique, appliqué(e) au moyen de régulation, pour modifier la valeur de pression maximale.

Suivant un exemple de réalisation non limitatif, le moyen de commande peut comprendre un moyen de commande manuel, tel qu'un joystick.

Alternativement, le moyen de commande peut être un moyen de commande automatisé. Par exemple, le moyen de commande peut comprend un module de commande relié à un capteur de détection de blocage des roues, et/ou à un capteur atmosphérique, et émettant un signal de commande vers le moyen de régulation en fonction des signaux fournis par le(s)dit(s) capteur(s).

Dans un mode de réalisation avantageux, mais nullement limitatif, le moyen de commande peut réaliser un ajustement continu de la pression maximale.

Ainsi, l'ajustement du freinage maximal peut être réalisé de manière plus précise et plus adaptée en fonction du coefficient d'adhérence rail-roue.

Dans un mode de réalisation alternatif, le moyen de commande peut réaliser un ajustement discret de la pression maximale.

Dans ce cas, le moyen de commande peut comprendre un ou plusieurs boutons permettant de sélectionner une valeur de pression maximale parmi au moins deux valeurs prédéterminées.

Avantageusement, le système selon l'invention peut en outre comprendre un moyen d'affichage d'une valeur de pression maximale indiquée au moyen de régulation, par exemple aménagé dans un poste de conduite du véhicule.

Ainsi, l'opérateur peut réaliser un ajustement précis de la pression maximale dans le circuit hydraulique, et donc du couple de freinage maximal.

Un tel moyen d'affichage peut comprendre un écran d'affichage.

Le véhicule selon l'invention peut en particulier être un véhicule de travaux rail-route équipé d'une pelle, d'une débroussailleuse, d'une nacelle, etc.

Par exemple, le véhicule selon l'invention peut être une pelle rail-route.

Le véhicule selon l'invention peut comprendre plusieurs, en particulier deux, essieux ferroviaires.

Au moins un, en particulier chaque, essieu ferroviaire peut être déplaçable entre une position rétractée dans laquelle il n'est pas utilisé et une position déployée dans laquelle il est utilisé par le véhicule pour rouler sur une voie ferrée.

Le véhicule selon l'invention peut en outre comprendre plusieurs, en particulier deux, essieux comportant des roues pneumatiques pour circuler sur la route, lorsque les essieux ferroviaires ne sont pas utilisés.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1a et 1b sont des représentations schématiques simplifiées d'un exemple de réalisation non limitatif d'un système de régulation du freinage hydrostatique d'un véhicule selon l'invention, dans le circuit hydraulique d'un véhicule ; et
- la FIGURE 2 est une représentation schématique d'un exemple de réalisation non limitatif d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

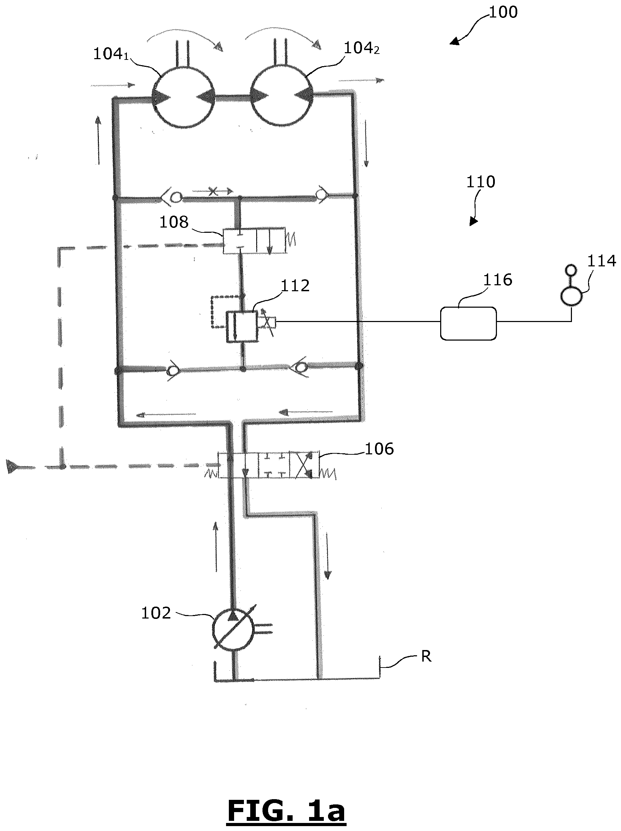

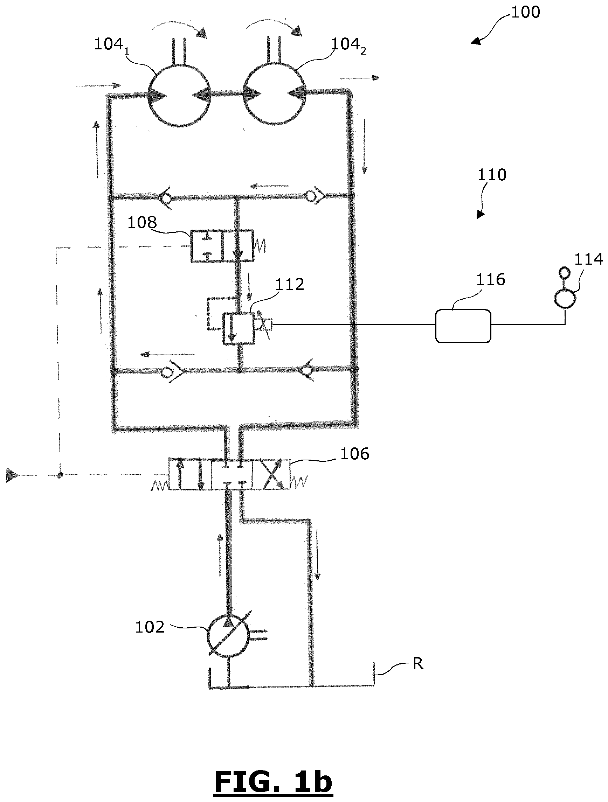

Les FIGURES 1a et 1b sont des représentations schématiques simplifiées d'un exemple de réalisation non limitatif d'un système de régulation du freinage hydrostatique d'un véhicule selon l'invention, au sein d'un exemple de réalisation d'un circuit hydraulique d'un véhicule.

En particulier, la FIGURE 1a représente le système de régulation dans une phase d'accélération lors de laquelle il n'y a pas de freinage hydrostatique et le système de régulation n'est pas utilisé.

La FIGURE 1b représente le système de régulation dans une phase de freinage hydrostatique, par exemple lorsque la pédale d'accélération est complètement relâchée.

Le circuit hydraulique 100 représenté sur les FIGURES 1a et 1b comprend un groupe motopompe 102 alimentant deux moteurs hydrauliques 104₁ et 104₂, montés en série dans le circuit hydraulique 100. Une valve 106 de sélection de direction permet de déterminer le sens de circulation du véhicule, à savoir marche avant ou marche arrière.

Une valve 108 permet d'activer ou non le freinage hydrostatique lorsque la pédale d'accélération est relâchée et que le groupe motopompe 102 n'alimente plus les moteurs 104.

Le circuit hydraulique 100 comprend enfin un réservoir R de fluide hydraulique.

Le circuit hydraulique 100 comprend en outre un système 110 de régulation du freinage hydrostatique. Le système de régulation 110 comprend une valve de pression proportionnelle 112 et un moyen de commande manuel 114 relié entre eux par un circuit électrique comprenant un ou plusieurs modules électroniques 116.

Le moyen de commande manuel représenté sur les FIGURES 1a et 1b est un joystick 114. Il permet à un opérateur d'augmenter ou de diminuer, à la volée, et de manière continue, la valeur du courant électrique appliqué à la valve de pression proportionnelle 112.

La modification de la valeur du courant électrique appliqué à la valve de pression proportionnelle 112 modifie la valeur seuil de pression maximale que la valve 112 accepte à son entrée de sorte que, lorsque la pression à son entrée atteint la valeur seuil, alors la valve 112 s'ouvre plus pour laisser passer plus de fluide et ainsi diminuer la pression à son entrée.

Sur la FIGURE 1a, le véhicule est en accélération et aucun freinage hydrostatique n'est réalisé. Le groupe motopompe 108 alimente les moteurs 104 par un fluide prélevé depuis le réservoir R. Le fluide sortant des moteurs 104 revient dans le réservoir R. Dans cette configuration, la valve 108 d'activation de freinage hydrostatique est non-passante et aucun freinage hydrostatique n'est réalisé.

Sur la FIGURE 1b, l'accélération demandée au véhicule est arrêtée, par exemple en relâchant une pédale d'accélération. Dès que la pédale d'accélération est relâchée :
- la valve 106 de sélection du sens de marche est commandée pour se mettre dans une configuration non-passante, et
- la valve 108 d'activation du freinage hydrostatique est commandée pour se mettre dans une configuration passante et activer ainsi le freinage hydrostatique.
Dans cette configuration, le fluide hydraulique sortant du moteur aval 104₂ repasse dans la valve d'activation du freinage hydrostatique 108, puis dans la valve de pression proportionnelle 112 pour être réinjecté dans le moteur amont 104₁. Autrement dit, lors du freinage hydrostatique, les moteurs 104₁, 104₂ et la valve de pression proportionnelle 112 se trouvent, en série, dans un circuit hydraulique fermé, et la valve de pression proportionnelle 112 reçoit en entrée le fluide sortant du moteur 104₁ et réinjecte par sa sortie le fluide dans le moteur 104₁.

En fonction du courant électrique qui lui est appliqué, la valve de pression proportionnelle 112 ajuste la pression du fluide qui se présente à son entrée. Lorsque la pression du fluide en entrée de la valve proportionnelle 112 devient supérieure ou égale à une valeur seuil de pression, alors la valve s'ouvre pour diminuer cette pression. La valeur seuil de pression est ajustée à la volée et sur demande par le courant électrique appliqué à la valve proportionnelle 112.

Ainsi, en ajustant la pression maximale que peut atteindre le fluide sortant des moteurs 104₁-104₂, la valve de pression proportionnelle 112 permet d'ajuster le couple du freinage hydrostatique.

Dans l'exemple représenté sur les FIGURES 1a et 1b, le système de régulation du freinage hydrostatique comprend un unique moyen de commande et un unique moyen de régulation de pression pour les deux moteurs.

Bien entendu, suivant une réalisation alternative, le système selon l'invention peut mettre en oeuvre un moyen de régulation de pression individuel et indépendant, éventuellement associé à un moyen de commande individuel et indépendant, pour au moins un, en particulier chaque, moteur hydraulique.

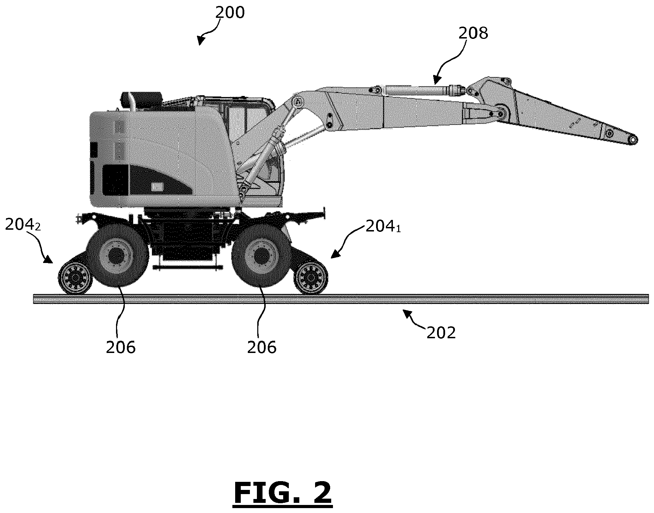

La FIGURE 2 est une représentation schématique d'un exemple de réalisation non limitatif d'un véhicule selon l'invention.

Le véhicule 200 représenté sur la FIGURE 2 est un véhicule rail-route pour réaliser des travaux de voiries, dans ou en périphérie d'une voie ferrée 202.

Le véhicule 200 comporte deux essieux ferroviaires 204₁ et 204₂, comprenant des roues métalliques, pour circuler sur la voie ferrée 202. Chaque essieu ferroviaire 204 est déplaçable entre une position rétractée dans laquelle il n'est pas utilisé et une position déployée dans laquelle il est utilisé par le véhicule 200 pour rouler sur la voie ferrée 202.

Le véhicule 200 comporte en outre deux essieux comportant des roues pneumatiques 206 pour circuler sur la route, lorsque les essieux ferroviaires 204 ne sont pas utilisés.

Le véhicule 200 comporte un bras mécanique 208 pouvant être muni d'un outil de travail, tel qu'une pelle, une tondeuse, une nacelle ou une débrousailleuse, etc.

Le véhicule 200 de la FIGURE 2 est muni d'un système de freinage selon l'invention, et en particulier du système de freinage 110 de la FIGURE 1, pour réaliser un freinage des roues métalliques d'au moins un des essieux ferroviaires 204. En particulier, chaque moteur hydraulique, respectivement 104₁ et 104₂, peut être un moteur se trouvant dans un essieu ferroviaire, respectivement 204₁ et 204₂.

Bien entendu, l'invention n'est pas limitée aux exemples détaillés ci-dessus.

## Revendications

1. Véhicule ferroviaire (200), en particulier rail-route, comprenant au moins un moteur hydraulique (104₁,104₂) alimenté en fluide hydraulique pour déplacer ledit véhicule (200) sur une voie ferrée (202), **caractérisé en ce qu'**il comprend un système (110) de régulation d'un freinage hydrostatique dudit véhicule (200), ledit système (110) comprenant pour au moins un moteur hydraulique (104₁,104₂) :
- au moins un moyen (112) de régulation de la pression dudit fluide hydraulique en aval dudit moteur hydraulique (104₁,104₂) lors du freinage hydrostatique dudit véhicule (200), et
- un moyen (114) de commande dudit au moins un moyen de régulation (112) pour modifier une valeur maximale de la pression dudit fluide hydraulique en aval dudit moteur hydraulique (104₁,104₂).

2. Véhicule (200) selon la revendication précédente, **caractérisé en ce qu'**il comprend au moins deux moteurs hydrauliques (104₁,104₂), le système de régulation comprenant au moins un moyen de régulation, respectivement au moins un moyen de commande, individuel pour au moins un moteur.

3. Véhicule (200) selon l'une quelconque des revendications précédentes, **caractérisé en ce qu'**il comprend au moins deux moteurs hydrauliques (104₁,104₂) reliés en série, l'au moins un moyen de régulation (112), et/ou l'au moins un moyen de commande (114), étant commun auxdits moteurs (104₁,104₂) reliés en série.

4. Véhicule (200) selon l'une quelconque des revendications précédentes, **caractérisé en ce que** le moyen de régulation comprend une valve de pression proportionnelle (112), traversé par le fluide hydraulique sortant dudit(desdits) moteur(s) hydraulique(s) (104₁,104₂) lors du freinage hydrostatique.

5. Véhicule (200) selon les revendications 3 et 4, **caractérisé en ce que**, lors du freinage hydrostatique, la valve de pression proportionnelle (112) est reliée en série, et en circuit fermé, avec les moteurs (104₁,104₂) montés en série, et injecte le fluide hydraulique sortant d'un (114₁) des moteurs montés en série en entrée d'un autre (114₂) des moteurs montés en série.

6. Véhicule (200) selon l'une quelconque des revendications précédentes, **caractérisé en ce que** le moyen de commande comprend un moyen de commande manuel (114) pour modifier la valeur de pression maximale.

7. Véhicule (200) selon la revendication précédente, **caractérisé en ce que** le moyen de commande (114) permet d'augmenter ou de diminuer une tension électrique, ou un courant électrique, appliqué(e) au moyen de régulation (112).

8. Véhicule (200) selon l'une quelconque des revendications précédentes, **caractérisé en ce que** le moyen de commande (114) réalise un ajustement continu de la pression maximale.

9. Véhicule (200) selon l'une quelconque des revendications précédentes, **caractérisé en ce qu'**il comprend un moyen d'affichage d'une valeur de pression maximale indiquée au moyen de régulation (112).

10. Véhicule (200) selon l'une quelconque des revendications précédentes, **caractérisé en ce qu'**il s'agit d'un véhicule de travaux rail-route équipé d'une pelle, d'une débroussailleuse, d'une nacelle, etc.
